# EUROPÄISCHE PATENTSCHRIFT

(11) **EP 1 725 362 B1**
(45) Veröffentlichungstag und Bekanntmachung des Hinweises auf die Patenterteilung: **21.01.2009**
(21) Anmeldenummer: 05707572.3
(22) Anmeldetag: 22.02.2005
(51) Int. Cl.: B23D 31/00, F16C 7/02

(54) **VERFAHREN UND FERTIGUNGSEINRICHTUNG ZUR HERSTELLUNG EINER GETEILTEN LAGERANORDNUNG**
METHOD AND DEVICE FOR THE PRODUCTION OF A SPLIT BEARING ARRANGEMENT
PROCEDE ET DISPOSITIF DE PRODUCTION POUR REALISER UN SYSTEME DE PALIER EN PLUSIEURS PARTIES

(30) Priorität: 19.03.2004 EP 04006698
(43) Veröffentlichungstag der Anmeldung: 29.11.2006
(73) Patentinhaber: Alfing Kessler Sondermaschinen GmbH, 73433 Aalen (DE)
(72) Erfinder: HANSCH, Stefan, 73434 Aalen (DE); GROSS, Jürgen, 73431 Aalen (DE); SCHMID, Martin, Georg, 89542 Herbrechtigen (DE); HÜGLER, Eberhard, 73433 Aalen (DE)
(74) Vertreter: HOFFMANN EITLE
(86) Internationale Anmeldenummer: PCT/EP2005/001837
(87) Internationale Veröffentlichungsnummer: WO 2005/095039

(56) Entgegenhaltungen:
- EP-A- 0 507 519
- DE-C- 19 841 027
- DE-U- 9 417 630
- US-A- 5 263 622

## Beschreibung

Die vorliegende Erfindung betrifft ein Verfahren zur Herstellung einer geteilten Lageranordnung, bei dem in mehreren Bearbeitungsstationen ein Lageroberteil von einem einstückig mit diesem verbundenen Lagerbasisteil durch Einleiten einer Kraft über einen Bruchtrennvorgang in einer vorgegebenen Bruchebene abgetrennt und im Anschluss daran durch eine mindestens zwei Schrauben aufweisende Schraubverbindung wieder miteinander verbunden wird.

Die Erfindung betrifft ferner eine Fertigungseinrichtung zur Herstellung einer geteilten Lageranordnung, bei der das aus einem Lagerbasisteil und einem mit diesem einstückig verbundenen Lageroberteil bestehende Werkstück zumindest einer Bruchtrennstation zum Abtrennen des Lageroberteils vorn Lagerbasisteil und einer Schraubstation zum Wiederverbinden des Lageroberteils mit dem Lagerbasisteil mittels zumindest einer zwei Schrauben aufweisenden Schraubverbindung zugeführt wird.

Lageranordnungen der oben erwähnten Art weisen beispielsweise Werkstücke, wie Kurbelgehäuse, Pleuel oder dgl. auf.

Da der Bruchverlauf beim Bruchtrennvorgang unterschiedlich ist, muss sichergestellt sein, dass das jeweils abgetrennte Lageroberteil (im Falle eines Pleuels allgemein als "Kappe" bezeichnet) dem dazugehörigen Lagerbasisteil (im Falle eines Pleuels allgemein als "Stange" bezeichnet) zugeordnet bleibt.

Diese Zuordnung wird bei den meisten bekannten Verfahrensweisen und Fertigungseinrichtungen dadurch sichergestellt, dass vor dem eigentlichen Bruchtrennvorgang die Schrauben der Schraubverbindung eingesetzt und damit das jeweilige Lagerbasisteil mit dem dazugehörigen Lageroberteil verbunden wird, so dass ein Vertauschen ausgeschlossen ist.

Selbst wenn die Schrauben nicht vollständig, d.h. mit einem mehrere mm betragenden Spiel in Bezug auf die Längsachse der Schrauben eingedreht werden, besteht jedoch die Gefahr, dass die Schrauben beim Bruchtrennvorgang zumindest angeschlagen, wenn nicht sogar verbogen werden, was zu Schäden an der Schraubverbindung, einer Verminderung der Zugfestigkeit und in deren Folge zu einem Qualitätsverlust der Verbindung führt.

Aus diesem Grund sind auch bereits Verfahren und Fertigungseinrichtungen realisiert worden, bei denen das jeweilige Lageroberteil nach dem Bruchtrennvorgang von dem Lagerbasisteil getrennt, aus dem Prozess ausgeschleust und nach erfolgtem Abschluss der nach dem Bruchtrennvorgang erforderlichen Arbeitsgänge wieder zugeführt wird.

Eine derartige Arbeitsweise erfordert jedoch aufgrund der Prozesstrennung einen erheblichen logistischen, verfahrens-und vorrichtungstechnischen Aufwand, ohne dass Zuordnungsfehler vollkommen auszuschließen sind.

Die EP 0507519 offenbart ein Verfahren sowie eine Vorrichtung zur Herstellung einer geteilten Lageranordnung gemäß dem Oberbegriff von Anspruch 1 und 9.

Aufgabe der vorliegenden Erfindung ist es, eine Verfahrensweise sowie eine Fertigungseinrichtung zur Verfügung zu stellen, bei der Beschädigungen an den Schrauben sowie Zuordnungsfehler in Bezug auf die Lageroberteile vollkommen ausgeschlossen sind.

Diese Aufgabe wird hinsichtlich des Verfahrens erfindungsgemäß durch Anspruch 1 gelöst.

Diese Aufgabe wird hinsichtlich der Fertigungseinrichtung erfindungsgemäß durch Anspruch 9 gelost.

Der Erfindung liegt der Gedanke zugrunde, die Vorteile von herkömmlichen Verfahrensweisen und Fertigungseinrichtungen, bei denen die Schrauben vor dem Bruchtrennvorgang angeordnet werden, mit den Vorteilen eines Bruchtrennverfahrens ohne Schrauben zu vereinen.

Dies wird erfindungsgemäß durch die Anordnung einer über die gesamte Fertigungssequenz den beiden Lagerteilen zugeordnete Hilfsabstützung erreicht, die letztendlich die Aufgabe von eingesetzten Schrauben in einer neuartigen Weise übernimmt und sicherstellt, dass das jeweilige Lageroberteil am zugehörigen Lagerbasisteil über den gesamten Fertigungsprozess verbleibt. Mit anderen Worten: Die Hilfsabstützung ist nicht einer bestimmten Station zugeordnet, sondern verbleibt auf Grund ihrer Anordnung auf der Adaptervorrichtung über den gesamten Fertigungsprozess im Bereich der beiden Lagerteile und damit am Werkstück.

Grundsätzlich kann die Hilfsabstützung in verschiedenster Weise gestaltet sein. Sie kann aus einem oder mehreren Abstützelementen bestehen, die je nach Formgebung an geeigneter Stelle am Lageroberteil angreifen. Sie kann mechanisch, pneumatisch oder auch hydraulisch betätigt sein.

Zwar ist der Einsatz von Adaptervorrichtungen zur Aufnahme und Halterung von Werkstücken bei Fertigungsprozessen mit einer Anzahl von Bearbeitungsstationen auf dem Gebiet von Fertigungsstraßen bereits bekannt. Der Einsatz bei einem Verfahren zur Herstellung einer geteilten Lageranordnung und die Anordnung einer Hilfsabstützung auf der Adaptervorrichtung sowie deren spezielle Anordnung in Verbindung mit der Zustell- bzw. Rückstellmöglichkeit ist jedoch vollkommen neu und eröffnet eine Vielzahl von überraschenden Möglichkeiten für den Verfahrensablauf.

Eine dieser Möglichkeiten eröffnet die Zustell- und Rückstellmöglichkeit der Hilfsabstützung. So ist es bei bestimmten Arbeitsgängen und insbesondere beim Transport von einer Bearbeitungsstation zur nächsten Bearbeitungsstation erforderlich, dass das Lageroberteil fest an dem Lagerbasisteil gehalten wird. Bei bestimmten Arbeitsgängen und in einigen Bearbeitungsstationen ist es jedoch notwendig, die Hilfsabstützung zumindest außer Kraft zu setzen bzw. ganz zurückzuziehen, und zwar in einem Stadium, in dem die Schraubverbindung noch nicht oder noch nicht vollständig hergestellt bzw. angeordnet ist. Durch die Zustell- bzw. Rückstellmöglichkeit wird eine bisher nicht erreichte Flexibilität bei verschiedensten Arbeitsgängen erzielt, und zwar ohne Einschränkung der Vorteile einer Bearbeitung unter Einsatz einer Adaptervorrichtung.

Für eine zuverlässige Bearbeitung ist es erforderlich, dass das Lagerbasisteil in allen Bearbeitungsstationen auf der Adaptervorrichtung festgespannt ist. Dieses Festspannen kann durch interne oder externe Spanneinrichtungen durchgeführt werden. Eine besonders vorteilhafte Lösung ergibt sich jedoch, wenn zum Festspannen des Lagerbasisteiles auf der Adaptervorrichtung ein oder mehrere Spannzylinder vorgesehen sind, die mit entsprechenden Gegenanschlägen auf der Adaptervorrichtung zusammenarbeiten.

Grundsätzlich kann die Hilfsabstützung derart gestaltet sein, dass sie beim Bruchtrennvorgang die Haltefunktion für das Lageroberteil am Lagerbasisteil übernimmt. Für bestimmte Werkstoffe und Werkstückformen kann es jedoch zweckmäßig sein, in der Bruchtrennstation von außen einwirkende Hauptabstützungen vorzusehen, die beim Bruchtrennvorgang nachgiebig auf das Lageroberteil einwirken.

Grundsätzlich kann zwar das Werkstück nach dem Bruchtrennvorgang unmittelbar der Schraubstation zugeführt werden, erfindungsgemäß ist es jedoch vorgesehen, dass das Lagerbasisteil und das Laberoberteil nach dem Bruchtrennvorgang in der Bruchebene einem Löse- und Reinigungsvorgang unterzogen werden.

Dieser Löse- und Reinigungsvorgang kann in der verschiedensten Weise gestaltet sein.

Vorteilhaft ist es, wenn der Lösevorgang durch Vibrations-oder Prellschlageinwirkung erfolgt. Hierzu kann in der jeweiligen Station eine Rüttel- oder Prellschlagvorrichtung vorgesehen werden, die an dem Lageroberteil angreift und dieses in schneller Folge in der Bruchebene mit dem Lagerbasisteil in Kontakt bringt. Auf diese Weise können durch den Bruchtrennvorgang erzeugte und lose in der Bruchfläche befindliche Metallpartikel entfernt werden. Dieser Vorgang kann mittels einer Abblas-, Absaug- oder Bürsteinrichtung unterstützt werden.

In der Phase der Vibrations- oder Prellschlageinwirkung muss das Lageroberteil gegenüber dem Lagerbasisteil parallel zur Bruchebene lagegenau fixiert und gleichzeitig senkrecht zur Bruchfläche lose gehalten werden. Zweckmäßig ist es hierbei eine Fixiervorrichtung vorzusehen, die Fixier- und Haltedorne aufweist, welche in die Bohrungen für die Schrauben einführbar sind. Bei diesem Vorgang werden die Hilfsabstützungen zurückgezogen, so dass für den Reinigungsvorgang durch Abblasen, Absaugen oder Abbürsten das Lageroberteil sogar zur Bildung eines Spaltes relativ weit vom Lagerbasisteil abgerückt werden kann, ohne dass dabei die Verbindung zwischen diesen beiden Teilen aufgehoben wird und damit die Eingangs erwähnten Zuordnungsfehler auftreten können.

Grundsätzlich können die Fixier- und Haltedorne in jeder beliebigen Weise angeordnet werden. Für eine zwei Schrauben aufweisende Schraubverbindung ist es jedoch vorteilhaft, die hierfür erforderlichen zwei Fixier- und Haltedorne an einem Ende über ein Joch miteinander zu verbinden und dieses Joch mittels eines Zustellzylinders zur Durchführung der erforderlichen Einführ- bzw. Zurückziehbewegungen zu betätigen.

In der Praxis hat sich bewährt, vor dem Bruchtrennvorgang zur Definition der Bruchtrennebene im Werkstück eine sogenannte Bruchtrennkerbe anzubringen. Diese Kerbe kann in verschiedenster Weise hergestellt werden. Vorteilhaft ist es, wenn die Kerbe mittels Laser im Bereich der Bruchtrennebene angebracht wird.

Zweckmäßig ist es dabei, dass die Bruchtrennkerbe mittels des Lasers in einer separaten Station eingebracht wird, die unmittelbar vor der Bruchtrennstation angeordnet ist.

Vorteilhaft ist es, unmittelbar nach dem Löse- und Reinigungsvorgang die Schrauben für die Schraubverbindung bereitzustellen, in die hierfür notwendigen Bohrungen einzuführen und abschließend mit einem vorgegebenen Drehmoment anzuziehen. Dieser Vorgang erfolgt zweckmäßigerweise in einer separaten, der Löse- und Reinigungsstation nachgeschalteten Schraubstation.

Es kann jedoch auch zweckmäßig sein, den Löse- und Reinigungsvorgang nicht vor, sondern nach dem Einführen und Anziehen der Schrauben durchzuführen. Hierzu ist es erforderlich, die Schrauben nach dem Anziehen wieder zu lösen und so weit aufzudrehen, dass das Lageroberteil etwas von dem Lagerbasisteil abgehoben werden kann. In dieser Phase kann dann der oben beschriebene Lösevorgang durch Vibrations- oder Prellschlageinwirkung sowie die Unterstützung durch Abblasen, Absaugen oder Abbürsten erfolgen. Aufgrund der Anordnung der Schrauben befindet sich die Hilfsabstützung dabei in der zurückgezogenen Lage. Selbstverständlich ist danach ein erneutes Eindrehen und Anziehen der Schrauben erforderlich. Dies kann je nach Verfahrensablauf durch Rückfördern von der Löse- und Reinigungsstation in die Schraubstation oder in einer zusätzlichen Schraubstation erfolgen.

Grundsätzlich kann die Förderung des Werkstückes von Bearbeitungsstation zu Bearbeitungsstation in jeder beliebigen, jeweils an die räumlichen Gegebenheiten, die Fertigung sowie das jeweils zu bearbeitende Werkstück angepassten Form erfolgen. Als besonders zweckmäßig hat sich dabei jedoch eine Karussellanordnung erwiesen, um die die einzelnen Bearbeitungsstationen angeordnet sind und über die das Zu- und Abfördern der Adaptervorrichtung zu den bzw. von den einzelnen Bearbeitungsstationen erfolgt. So kann im Bereich der Karussellanordnung eine Be- und Entladestation, eine Laserstation, eine Bruchtrennstation, eine Löse- und Reinigungsstation sowie eine Schraubstation vorgesehen werden.

Eine besonders vorteilhafte Anordnung ergibt sich jedoch, wenn bei einer derartigen Fertigungseinrichtung die Be- und Entladestation, die Schraub- und Laserstation sowie die Bruchtrennstation und die Löse- und Reinigungsstation jeweils zu einer Doppelstation zusammengefasst sind. Auf diese Weise können verschiedene Arbeitsgänge in den verschiedenen Stationen gleichzeitig ablaufen, so dass Stillstandszeiten der jeweiligen Station auf ein Minimum reduziert werden. Eine in dieser Weise gestaltete Fertigungseinrichtung ist daher in der Lage, eine größere Anzahl von Werkstücken pro Zeiteinheit ohne Qualitätseinbuße zu bearbeiten, als dies mit einem üblichen Hintereinanderschalten von Bearbeitungsstationen und einem schrittweisen Durchschleusen von zu bearbeitenden Werkstücken möglich wäre.

Im Folgenden sind wesentliche Elemente, Aspekte und Verfahrensschritte der Erfindung unter Bezugnahme auf die beigefügten Zeichnungen näher beschrieben und erläutert.
- Figur 1: zeigt ein Ausführungsbeispiel einer Adaptervorrichtung mit einem Werkstück in Form eines Kurbelgehäuses mit an einem Lageroberteil des Kurbelgehäuses angreifender, d.h. zugestellter Hilfsabstützung,
- Figur 2: zeigt die Anordnung gemäß Figur 1 mit vom Lageroberteil des Kurbelgehäuses zurückgezogener Hilfsabstützung,
- Figuren 3a - 31: zeigen schematisch das Lageroberteil des Kurbelgehäuses nach den Figuren 1 und 2 mit Hilfsabstützung in verschiedenen Phasen der Bearbeitung und in verschiedenen Bearbeitungsstationen der erfindungsgemäßen Fertigungseinrichtung, und
- Figur 4: zeigt eine schematische Maschinenübersicht einer mit einer Karussellanordnung ausgestatteten erfindungsgemäßen Fertigungseinrichtung zur Durchführung des erfindungsgemäßen Verfahrens.

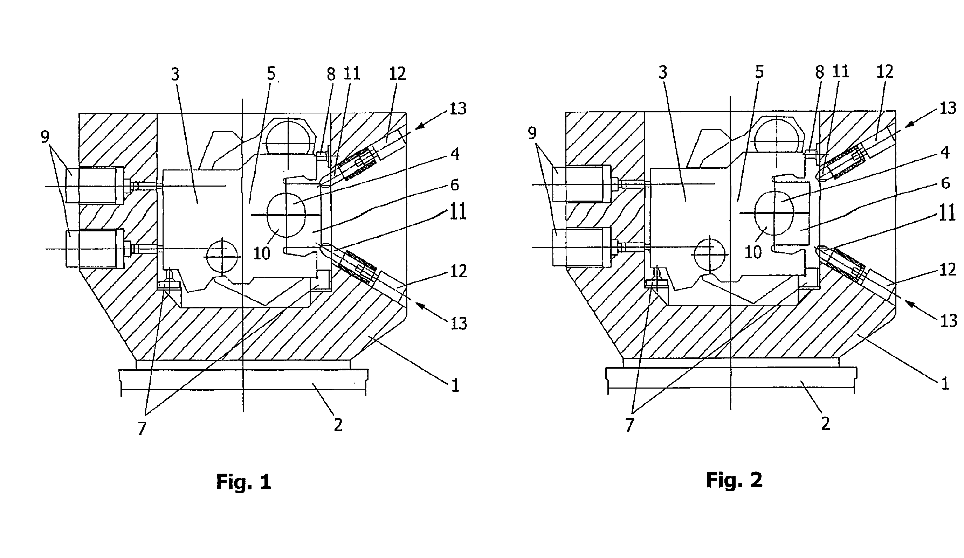

Das in den Figuren 1 und 2 in einem Vertikalschnitt dargestellte Ausführungsbeispiel einer Adaptervorrichtung 1 ruht auf einer Transporteinrichtung 2 und ist im wesentlichen trogförmig, d.h. im Querschnitt U-förmig ausgebildet.

Das Werkstück in Form eines Kurbelgehäuses 3 ruht im Inneren der trogförmigen Adaptervorrichtung 1 und ist (in der Zeichnungsebene betrachtet) mit einer Anzahl von hintereinander angeordneten Lageranordnungen 4 ausgestattet, die jeweils aus einem Lagerbasisteil 5 sowie einem Lageroberteil 6 bestehen.

Das Kurbelgehäuse 3 ruht auf seiner Unterseite auf Gegenanschlägen 7 und liegt an der der Lageranordnung 4 zugewandten Seite an einem Gegenanschlag 8 an.

Auf der der Lageranordnung 4 entgegengesetzten Seite ist die Adaptervorrichtung mit zwei Spannzylindern 9 ausgestattet, über die das Kurbelgehäuse 3 an die Gegenanschläge 7 und 8 gepresst und auf diese Weise in der Adaptervorrichtung festgespannt werden kann.

Um die Lageranordnung 4 zu teilen, muss das Lageroberteil 6 von dem einstückig mit diesem verbundenen Lagerteil 5 entlang einer Bruchebene 10 abgetrennt werden. Dies erfolgt durch einen an sich bekannten Bruchtrennvorgang in einer sogenannten Bruchtrennstation, in der in bekannter Weise über einen meist zweigeteilten Bruchtrenndorn eine Bruchkraft in die Bohrung der Lageranordnung 4 eingeleitet wird.

Wie aus den Figuren 1 und 2 hervorgeht, sind auf der den Spannzylindern 9 gegenüberliegenden Seite der Adaptervorrichtung 1 in einem spitzen Winkel zueinander angeordnete Stützstempel 11 vorgesehen, die am vorderen Ende von Stützzylindern 12 angeordnet sind, welche gemeinsam die Hilfsabstützung 13 für das Lageroberteil 6 bilden. Wie bereits erwähnt, zeigt Figur 1 die Hilfsabstützung 13 im an das Lageroberteil angreifender, d.h. zugestellter Stellung, während die Figur 2 die Stützstempel 11 der Hilfsabstützung 13 in zurückgezogener, d.h. vom Lageroberteil 6 abgehobener Stellung zeigt.

Bei dem in den Figuren dargestellten Ausführungsbeispiel wird das Lageroberteil 6 am Lagerbasisteil 5 nach Durchführung des Bruchtrennvorganges durch eine zwei Schrauben aufweisende Schraubverbindung gehalten.

In einer nicht dargestellten Bohrstation werden hierzu vor dem Bruchtrennvorgang in das Lageroberteil 6 und das Lagerbasisteil 5 Aufnahmebohrungen für Schrauben sowie das hierfür notwendige Gewinde in bekannter Weise eingebracht. Das in dieser Weise vorbereitete Kurbelgehäuse wird dann mittels der Transporteinrichtung 2 über die Adaptervorrichtung 1 in die erste Station der Fertigungseinrichtung eingefördert, in der in der Bruchebene 10 Bruchkerben 14 angebracht werden. Diese Technologie ist bekannt und kann in verschiedenster Weise, vorzugsweise jedoch über ein Abtragen von Material mittels Laser erfolgen.

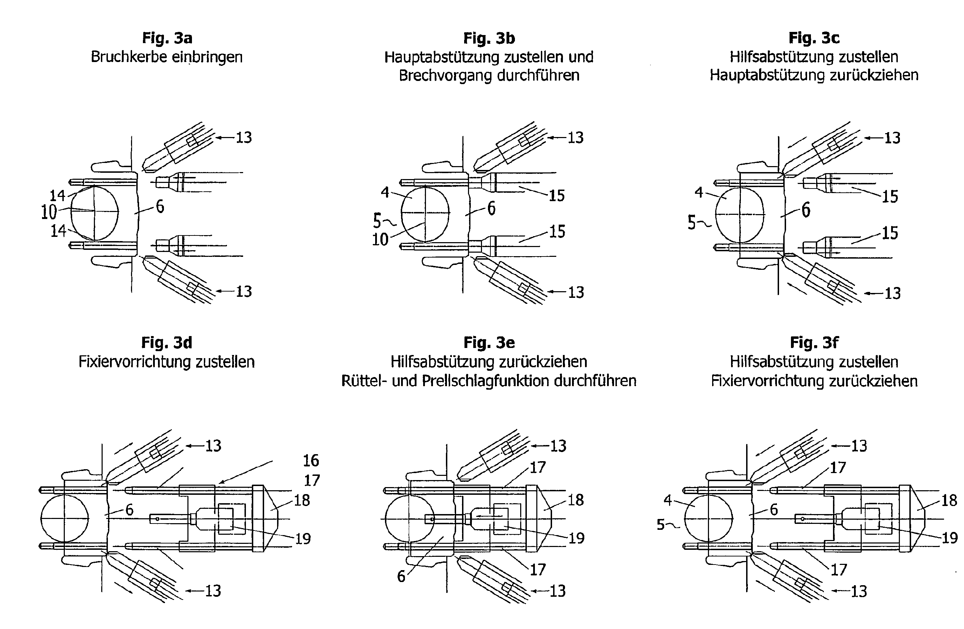

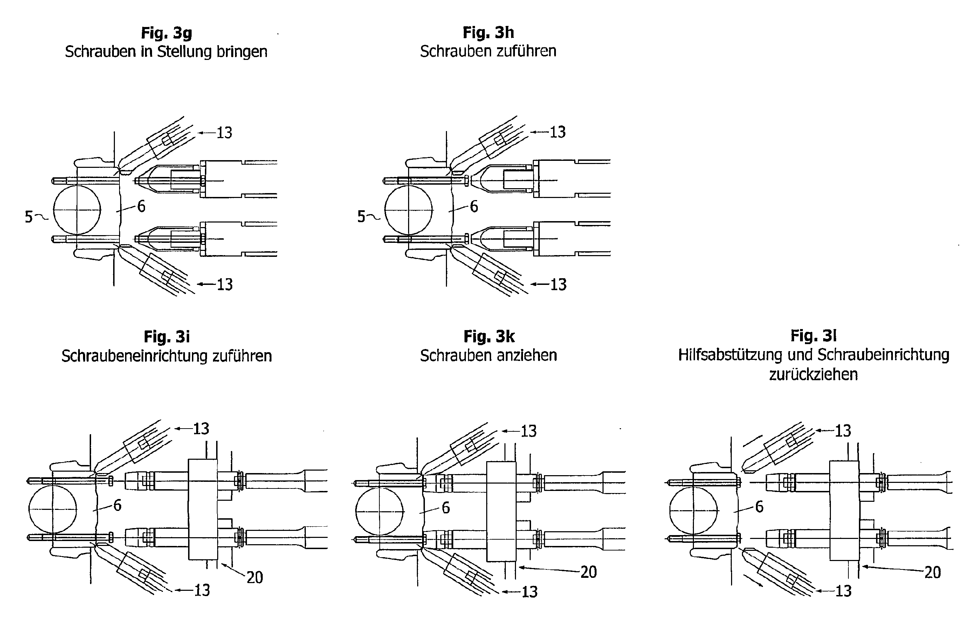

Schematisch ist dieser Vorgang in Figur 3a dargestellt. Die Hilfsabstützung 13 ist in dieser Phase zurückgezogen.

Nach dem Einbringen der Bruchkerben 14 wird das Kurbelgehäuse 3 über die Transporteinrichtung 2 in der Adaptervorrichtung in die Bruchtrennstation eingefördert. Da in dieser Phase das Lageroberteil 6 noch einstückig mit dem Lagerbasisteil verbunden ist, befindet sich die Hilfsabstützung 13 noch im zurückgezogenen Zustand, wie dies aus Figur 3b hervorgeht.

Bei dem dargestellten Ausführungsbeispiel werden vor dem nachfolgenden Bruchtrennvorgang Hauptabstützungen 15 zugestellt, die in bekannter Weise nachgiebig an dem Lageroberteil 6 angreifen und beim Bruchtrennvorgang einen sogenannten Drehbruch verhindern.

Nach vollzogenem Bruchtrennvorgang wird zuerst die Hilfsabstützung 13 zugestellt und im Anschluss daran die Hauptabstützung 15 zurückgezogen, wie dies in Figur 3c schematisch dargestellt ist. In diesem Fall sorgt die Hilfsabstützung 13 dafür, dass sich das in dieser Phase bereits vom Lagerbasisteil 5 abgetrennte Lageroberteil 6 nicht vom Lagerbasisteil 5 lösen und dabei nicht mit einem anderen Lageroberteil verwechselt werden kann.

Nach dem Zurückziehen der Hauptabstützung 15 wird - wie in Figur 3d schematisch dargestellt - eine Fixiervorrichtung 16 zugestellt. Die Fixiervorrichtung 16 weist im vorliegenden Ausführungsbeispiel zwei Fixier- und Haltedorne 17 auf, die über ein Joch 18 miteinander verbunden sind.

Im Bereich der Fixiervorrichtung ist ferner eine Rüttel- oder Prellschlagvorrichtung 19 angeordnet.

Wie aus Figur 3e zu ersehen ist, werden die Fixier- und Haltedorne 17 in einem weiteren Arbeitsschritt in die Bohrungen für die Schrauben eingeführt und auf diese Weis das Lageroberteil 6 gegenüber dem Lagerbasisteil 5 parallel zur Bruchebene 10 lagegenau fixiert und gleichzeitig senkrecht zur Bruchebene lose gehalten. In dieser Phase wird dann die Hilfsabstützung 13 zurückgezogen und die Rüttel- oder Prellvorrichtung 19 zugestellt und an dem Lageroberteil 6 zur Anlage gebracht, wie dies in Figur 3e schematisch dargestellt ist. Im Anschluss daran wird dann die Rüttel- oder Prellschlagfunktion durchgeführt und damit möglicherweise an der Bruchebene anhaftende Metallpartikel gelöst.

Aufgrund der losen Halterung des Lageroberteils 6 durch die Fixier- und Haltedorne 17 kann das Lageroberteil im Bedarfsfalle sogar vom Lagerbasisteil 5 um einen begrenzten Betrag abgezogen und die Bruchfläche durch Abblasen, Absaugen oder Abbürsten zusätzlich gereinigt werden.

In einem nächsten Schritt wird dann die Hilfsabstützung 13 wieder zugestellt und damit das Lageroberteil 6 gegenüber dem Lagerbasisteil 5 exakt fixiert. In dieser Phase kann dann die Rüttel- oder Prellschlagvorrichtung 19 abgekoppelt und die Fixiervorrichtung 16 zurückgezogen werden.

In einem daran anschließenden Verfahrensschritt werden dann die Schrauben in Stellung gebracht und in die Bohrungen eingeschoben, wie dies in den Figuren 3g und 3h schematisch dargestellt ist. Nach dem Zuführen der Schrauben wird in einem daran anschließenden Arbeitsschritt eine Schraubeinrichtung 20 zugestellt. Im Anschluss daran werden die Schrauben mit einem vorgegebenen Drehmoment angezogen, wie dies in Figur 3k schematisch dargestellt ist.

In den beschriebenen Phasen (Figuren 3f bis 3k) ist das Lageroberteil 6 stets präzise am Lagerbasisteil 5 gehalten, so dass nicht nur die Eingangs beschriebenen Verwechselungen ausgeschlossen sind, sondern auch sichergestellt ist, dass das Lageroberteil 6 am Lagerbasisteil 5 sicher in einer Lage gehalten wird, die genau der Lage vor dem Bruchtrennvorgang entspricht, d.h. die Erhebungen und Vertiefungen der Bruchfläche des einen Teiles mit den Vertiefungen und Erhebungen der Bruchfläche des anderen Teiles präzise korrespondieren. Diese Situation wird im übrigen erfindungsgemäß über den gesamten Fertigungsverlauf sichergestellt, da das Lageroberteil an dem Lagerbasisteil entweder durch die Hilfsabstützung 13 oder (wie in Figur 3e dargestellt) durch die Fixier- und Haltedorne 17 in präziser Zuordnung und Lage gehalten wird.

Ein weiterer Vorteil der erfindungsgemäßen Verfahrensweise besteht darin, dass die Schrauben erst nach abgeschlossenem Bruchtrennvorgang zugeführt und angezogen werden, so dass stets eine qualitativ hochwertige Schraubverbindung sichergestellt ist. Beschädigungen an Schrauben oder gar ein Verbiegen der Schrauben beim Bruchtrennvorgang ist somit ausgeschlossen.

Nach dem Anziehen der Schrauben mit einem vorgegebenen Drehmoment wird die Hilfsabstützung zurückgezogen und das in dieser Weise bearbeitete Kurbelgehäuse über die Adaptervorrichtung 1 und die Transportvorrichtung 2 einem weiteren Arbeitsvorgang zugeführt.

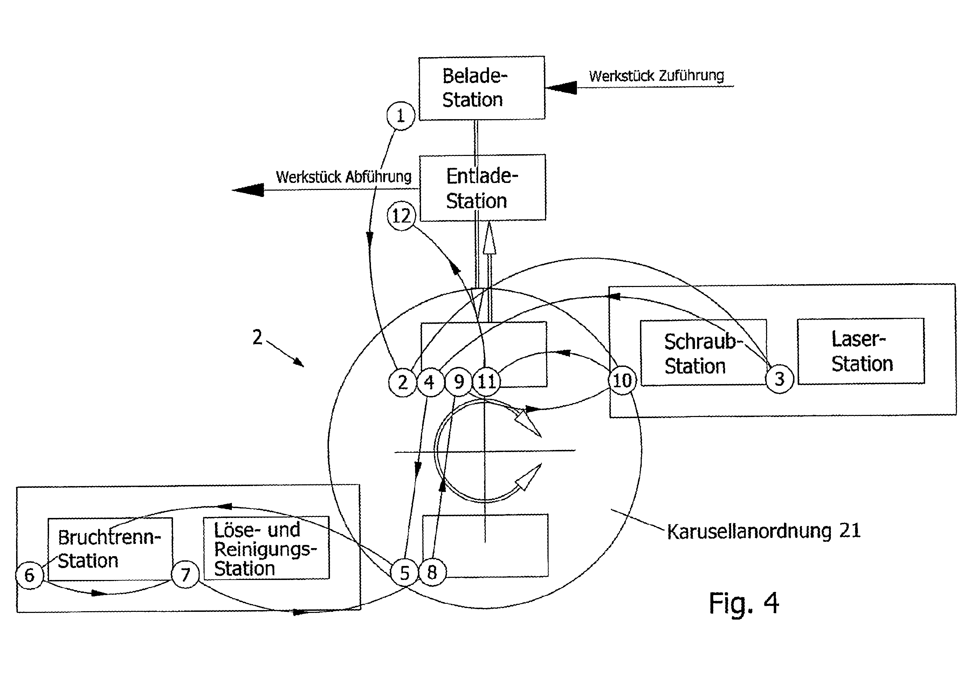

Bei der in Figur 4 schematisch dargestellten Fertigungseinrichtung ist als zentrale Transporteinrichtung 2 eine sogenannte Karussellanordnung 21 gewählt worden, an deren Umfang die verschiedenen Stationen angeordnet sind.

Charakteristisch für diese spezielle Anordnung ist weiter, dass jeweils zwei Stationen zu einer Doppelstation zusammengefasst sind.

Der Transport von einer Station zur daran anschließenden Station ist in Figur 4 durch Pfeile gekennzeichnet. Die Reihenfolge ergibt sich durch jeweils in einem Kreis angegebene Positionsnummern, die neben den verschiedenen Stationen auch den Ablauf auf der Karussellanordnung kennzeichnen.

Im einzelnen ist der Ablauf bei der in Figur 4 angedeuteten Fertigungseinrichtung wie folgt:
In der Position 1 wird das Werkstück in die Adaptervorrichtung eingesetzt, ausgerichtet und mittels der Spannzylinder festgespannt. Die Hilfsabstützungen befinden sich dabei in der zurückgezogenen Stellung (vgl. Figur 2).

Von der Position 1, d.h. der Beladestation, wird die Adaptervorrichtung mit dem festgespannten Werkstück auf die Karussellanordnung gefördert (Position 2) und von dort der Laserstation (Position 3) zugeführt.

Nach dem Einbringen der Bruchtrennkerbe in der Laserstation wird die Adaptervorrichtung mit dem Werkstück auf die Karussellanordnung in die Position 4 zurückgefördert und durch eine Drehung der Karussellanordnung in die Position 5 bewegt, von der sie dann der Bruchtrennstation (Position 6) und nach dem Bruchtrennen der Löse- und Reinigungsstation (Position 7) zugeführt wird.

Die Adaptervorrichtung gelangt dann mit dem bruchgetrennten und gereinigten Werkstück wieder auf die Karussellanordnung (Position 8) und durch Drehung der Karussellanordnung in die Position 9, von der die Adaptervorrichtung mit dem Werkstück dann der Schraubstation (Position 10) zugeführt wird, in der die Schrauben eingedreht und mit einem vorgegebenen Drehmoment angezogen werden.

Nach diesem Arbeitsgang wird die Adaptervorrichtung über die Position 11 auf der Karussellanordnung der Entladestation (position 12) zugeführt. Dort wird das fertig bearbeitete Werkstück der Adaptervorrichtung entnommen und abgeführt.

Der Einsatz einer Karussellanordnung 21 als zentrale Transporteinrichtung und die Gestaltung der Be- und Entladestation einerseits, der Schraub- und der Laserstation andererseits, sowie der Bruchtrenn- und der Löse- und Reinigungsstation zu jeweils einer Doppelstation hat den Vorteil, dass die im folgenden geschilderten Arbeitsgänge gleichzeitig ablaufen können, d.h. mit dem Beladen durch ein neues Werkstück nicht erst dann begonnen werden kann, wenn das vorangegangene, bereits fertig bearbeitete Werkstück entladen ist.

So kann aufgrund der Karussellanordnung 21 die Abfolge derart gewählt werden, dass in der Zeitspanne, in der ein Werkstück in der Laserstation mit einer Bruchtrennkerbe ausgestattet wird, gleichzeitig ein bereits mit einer Bruchtrennkerbe ausgestattetes vorangegangenes Werkstück in der Bruchtrennstation einem Bruchtrerinvorgang unterworfen und in der Löse- und Reinigungsstation von etwaigen Metallpartikeln befreit werden kann. Auf diese Weise können Stillstandszeiten in den einzelnen Stationen reduziert und die Bearbeitungsstückzahl pro Zeiteinheit erhöht werden.

## Patentansprüche

1. Verfahren zur Herstellung einer geteilten Lageranordnung, bei dem in mehreren Bearbeitungsstationen ein Lageroberteil von einem einstückig mit diesem verbundenen Lagerbasisteil durch Einleiten einer Kraft über einen Bruchtrennvorgang in einer vorgegebenen Bruchebene abgetrennt und im Anschluss daran durch eine mindestens zwei Schrauben aufweisende Schraubverbindung wieder miteinander verbunden wird,
das Lagerbasisteil und das Lageroberteil auf einer von Bearbeitungsstation zu Bearbeitungsstation geförderten Adaptervorrichtung festgelegt und das Lageroberteil zumindest bei einigen Arbeitsgängen in den Bearbeitungsstationen über eine auf der Adaptervorrichtung angeordnete und außerhalb des Bereichs der Schraubverbindung an dem Lageroberteil angreifende, zurückziehbare Hilfsabstützung gehalten ist, **dadurch gekennzeichnet, dass**
das Lagerbasisteil und das Lageroberteil nach dem Bruchtrennvorgang in der Bruchebene einem Löse- und Reinigungsvorgang unterzogen werden, und
das Lageroberteil während des Löse- und Reinigungsvorganges gegenüber dem Lagerbasisteil parallel zur Bruchebene lagegenau fixiert und gleichzeitig senkrecht zur Bruchebene lose gehalten wird.

2. Verfahren nach Anspruch 1, **dadurch gekennzeichnet, dass** das Lagerbasisteil in allen Bearbeitungsstationen auf der Adaptervorrichtung festgespannt ist.

3. Verfahren nach Anspruch 1, **dadurch gekennzeichnet, dass** beim Bruchtrennvorgang Hauptabstützungen nachgiebig auf das Lageroberteil einwirken.

4. Verfahren nach einem oder mehreren der vorhergehenden Ansprüche, **dadurch gekennzeichnet, dass** der Lösevorgang durch Vibrations- oder Prellschlageinwirkung erfolgt.

5. Verfahren nach einem oder mehreren der vorhergehenden Ansprüche, **dadurch gekennzeichnet, dass** der Reinigungsvorgang durch Abblasen, Absaugen, oder Abbürsten erfolgt.

6. Verfahren nach Anspruch 1, **dadurch gekennzeichnet, dass** vor dem Bruchtrennvorgang mittels Laser in der Bruchebene eine Bruchtrennkerbe eingebracht wird.

7. Verfahren nach einem oder mehreren der vorhergehenden Ansprüche 1 bis 6, **dadurch gekennzeichnet, dass** nach dem Löse- und Reinigungsvorgang die Schrauben eingeführt und mit einem vorgegebenen Drehmoment angezogen werden.

8. Verfahren nach einem oder mehreren der vorhergehenden Ansprüche 1 bis 7, **dadurch gekennzeichnet, dass** das Zu-und Abfördern der Adaptervorrichtung zu den bzw. von den einzelnen Bearbeitungsstationen über eine Karussellanordnung erfolgt.

9. Fertigungseinrichtung zur Herstellung einer geteilten Lageranordnung, bei der das aus einem Lagerbasisteil (5) und einem mit diesem einstückig verbundenen Lageroberteil (6) bestehende Werkstück zumindest einer Bruchtrennstation zum Abtrennen des Lageroberteils (6) vom Lagerbasisteil (5) entlang einer Bruchebene und einer Schraubstation zum Wiederverbinden des Lageroberteils mit dem Lagerbasisteil mittels zumindest einer zwei Schrauben aufweisenden Schraubverbindung zugeführt wird,
eine Transporteinrichtung (2) vorgesehen ist, über die eine das Werkstück tragende Adaptervorrichtung (1) von einer Bearbeitungsstation zu zumindest einer anschließenden Bearbeitungsstation gefördert wird, wobei die Adaptervorrichtung (1) mit einer zurückziehbaren Hilfsabstützung (13) ausgestattet ist, die derart auf der Adaptervorrichtung fest angeordnet ist, dass sie außerhalb der Schraubverbindung an dem Lageroberteil (6) des Werkstückes angreift, **dadurch gekennzeichnet, dass** im Anschluss an die Bruchtrennstation eine Löse- und Reinigungsstation vorgesehen ist, in der zur lagegenauen Fixierung parallel zur Bruchebene und zur losen Halterung senkrecht zur Bruchebene eine Fixiervorrichtung (16) vorgesehen ist.

10. Fertigungseinrichtung nach Anspruch 9, zur Durchführung des Verfahrens nach Anspruch 2, **dadurch gekennzeichnet, dass** zum Festspannen des Lagerbasisteiles (5) auf der Adaptervorrichtung )1) auf dieser angeordnete Spannzylinder (9) vorgesehen sind, die mit Gegenanschlägen (7, 8) zusammenarbeiten.

11. Fertigungseinrichtung nach Anspruch 9 oder 10 zur Durchführung des Verfahrens nach Anspruch 3, **dadurch gekennzeichnet, dass** in der Bruchtrennstation Hauptabstützungen (15) vorgesehen sind, die beim Bruchtrennvorgang nachgiebig an dem Lageroberteil (6) zur Anlage gebracht werden.

12. Fertigungseinrichtung nach einem oder mehreren der vorhergehenden Ansprüche 9 bis 11, zur Durchführung des Verfahrens nach Anspruch 4, **dadurch gekennzeichnet, dass** die Löse- und Reinigungsstation mit einer Rüttel- oder Prellschlagvorrichtung (19) ausgestattet ist, die auf das Lageroberteil (6) einwirkt.

13. Fertigungseinrichtung nach einem oder mehreren der vorhergehenden Ansprüche 9 bis 11, zur Durchführung des Verfahrens nach Anspruch 5, **dadurch gekennzeichnet, dass** die Löse- und Reinigungsstation mit einer Abblas-, Absaug- oder Bürsteinrichtung ausgestattet ist.

14. Fertigungseinrichtung nach einem oder mehreren der vorhergehenden Ansprüche 9 bis 13, **dadurch gekennzeichnet, dass** die Fixiervorrichtung (16) Fixier-und Haltedorne (17) aufweist, die in die Bohrungen für die Schrauben einführbar sind.

15. Fertigungseinrichtung nach Anspruch 14, für eine zwei Schrauben aufweisende Schraubverbindung, **dadurch gekennzeichnet, dass** zwei Fixier- und Haltedorne (17) vorgesehen sind, die an einem Ende über ein Joch (18) miteinander verbunden sind.

16. Fertigungseinrichtung nach Anspruch 15, **dadurch gekennzeichnet, dass** das Joch (18) mit einem Zustellzylinder verbunden ist.

17. Fertigungseinrichtung nach einem oder mehreren der vorhergehenden Ansprüche 9 bis 11, zur Durchführung des Verfahrens nach Anspruch 6, **dadurch gekennzeichnet, dass** vor der Bruchtrennstation eine Laserstation vorgesehen ist.

18. Fertigungseinrichtung nach einem oder mehreren der vorhergehenden Ansprüche 9 bis 17, zur Durchführung des Verfahrens nach Anspruch 7, **dadurch gekennzeichnet, dass** nach der Löse- und Reinigungsstation eine Schraubstation vorgesehen ist, in der die Schrauben eingeführt und über eine Schraubvorrichtung mit einem vorgegebenen Drehmoment angezogen werden.

19. Fertigungseinrichtung nach einem oder mehreren der Ansprüche 9 bis 18, zur Durchführung des Verfahrens nach Anspruch 8, **dadurch gekennzeichnet, dass** die Transporteinrichtung (2) im Wesentlichen als Karussellanordnung (21) ausgebildet ist, an der die Bearbeitungsstationen um deren Umfang verteilt angeordnet sind.

20. Fertigungseinrichtung nach Anspruch 19, **dadurch gekennzeichnet, dass** im Bereich der Karussellanordnung (21) eine Be- und Entladestation, eine Laserstation, eine Bruchtrennstation, eine Löse- und Reinigungsstation sowie eine Schraubstation vorgesehen sind.

21. Fertigungseinrichtung nach Anspruch 20, **dadurch gekennzeichnet, dass** die Be- und Entladestation, die Schraub- und Laserstation sowie die Bruchtrennstation und die Löse- und Reinigungsstation jeweils zu einer Doppelstation zusammengefasst sind.

## Claims

1. Method for producing a divided bearing arrangement in which in a plurality of machining stations a bearing upper part is separated from a bearing base part connected in one piece to it by introducing a force via a fracture-splitting operation in a predetermined fracture plane and following this are joined to one another again by at least one screw connection comprising at least two screws,
the bearing base part and the bearing upper part are fixed on an adapter device conveyed from machining station to machining station and the bearing upper part at least in some operations in the machining stations is held by a retractable auxiliary support arranged on the adapter device and gripping on the bearing upper part outside the region of the screw connection,
**characterised in that**
the bearing base part and the bearing upper part after the fracture-splitting operation in the fracture plane are subjected to a detachment and cleaning operation, and
during the detachment and cleaning operation the bearing upper part is fixed with respect to the bearing base part precisely in position parallel to the fracture plane and is simultaneously held loosely perpendicular to the fracture plane.

2. Method according to claim 1, **characterised in that** the bearing base part is clamped tightly to the adapter device in all machining stations.

3. Method according to claim 1, **characterised in that** in the fracture-splitting operation main supports act in yielding manner on the bearing upper part.

4. Method according to one or more of the preceding claims, **characterised in that** the detachment operation ensues by the action of vibrations or bumping.

5. Method according to one or more of the preceding claims, **characterised in that** the cleaning operation ensues by blowing, suction or brushing.

6. Method according to claim 1, **characterised in that** prior to the fracture-splitting operation a fracture-splitting notch is introduced in the fracture plane by means of a laser.

7. Method according to one or more of the preceding claims 1 to 6, **characterised in that** after the detachment and cleaning operation the screws are introduced and tightened by a predetermined torque.

8. Method according to one or more of the preceding claims 1 to 7, **characterised in that** the conveying to and fro of the adapter device to or from the individual machining stations ensues via a carousel arrangement.

9. Manufacturing device for producing a divided bearing arrangement in which the workpiece consisting of a bearing base part (5) and a bearing upper part (6) connected in one piece to the latter is fed to at least one fracture-splitting station for separating the bearing upper part (6) from the bearing base part (5) along a fracture plane and a screwing station for reconnecting the bearing upper part to the bearing base part by means of at least one screw connection comprising two screws,
a transport device (2) is provided via which an adapter device (1) bearing the workpiece is conveyed from one machining station to at least one adjoining machining station, wherein the adapter device (1) is equipped with a retractable auxiliary support (13) which is fixedly arranged on the adapter device in such a way that it grips on the bearing upper part (6) of the workpiece outside the screw connection, **characterised in that**
following the fracture-splitting station a detachment and cleaning station is provided in which for precise positional fixing parallel to the fracture plane and for loose mounting perpendicular to the fracture plane a fixing device (16) is provided.

10. Manufacturing device according to claim 9 for carrying out the method according to claim 2, **characterised in that** for tightly clamping the bearing base part (5) on the adapter device (1) clamping cylinders (9) arranged on the latter are provided which work in conjunction with counterstops.

11. Manufacturing device according to claim 9 or 10 for carrying out the method according to claim 3, **characterised in that** in the fracture-splitting station main supports (15) are provided which in the fracture-splitting operation are brought to rest in yielding manner on the bearing upper part (6).

12. Manufacturing device according to one or more of the preceding claims 9 to 11 for carrying out the method according to claim 4, **characterised in that** the detachment and cleaning station is equipped with a device for shaking or bumping (19) which acts on the bearing upper part (6).

13. Manufacturing device according to one or more of the preceding claims 9 to 11 for carrying out the method according to claim 5, **characterised in that** the detachment and cleaning station is equipped with a blowing, suction or brushing device.

14. Manufacturing device according to one or more of the preceding claims 9 to 13, **characterised in that** the fixing device (16) comprises fixing and holding pins (17) which are introducible into bores for the screws.

15. Manufacturing device according to claim 14 for a screw connection comprising two screws, **characterised in that** two fixing and holding pins (17) are provided which are connected to one another at one end via a yoke (18).

16. Manufacturing device according to claim 15, **characterised in that** the yoke (18) is connected to a feed cylinder.

17. Manufacturing device according to one or more of the preceding claims 9 to 11 for carrying out the method according to claim 6, **characterised in that** ahead of the fracture-splitting station a laser station is provided.

18. Manufacturing device according to one or more of the preceding claims 9 to 17 for carrying out the method according to claim 7, **characterised in that** after the detachment and cleaning station a screwing station is provided in which the screws are introduced and tightened by a predetermined torque by a screwing device.

19. Manufacturing device according to one or more of claims 9 to 18 for carrying out the method according to claim 8, **characterised in that** the transport device (2) is constructed substantially as a carousel arrangement (21) on which the machining stations are arranged around the perimeter thereof.

20. Manufacturing device according to claim 19, **characterised in that** in the region of the carousel arrangement (21) a loading and unloading station, a laser station, a fracture-splitting station, a detachment and cleaning station and a screwing station are provided.

21. Manufacturing device according to claim 20, **characterised in that** the loading and unloading station, the screwing and laser station as well as the fracture-splitting station and the detachment and cleaning station are combined in each case to form a double station.

## Revendications

1. Procédé de fabrication d'un système de palier en plusieurs parties, dans lequel, dans plusieurs stations d'usinage, une partie supérieure de palier est séparée d'une partie de base de palier, reliée d'une seule pièce à celle-ci, par induction d'une force, par l'intermédiaire d'un processus de séparation par fracturation, dans un plan de fracturation prédéterminé et, suite à cela, les parties de palier sont de nouveau reliées ensemble au moyen d'une liaison vissée présentant au moins deux vis,
la partie de base de palier et la partie supérieure de palier sont fixées sur un dispositif adaptateur, transporté d'une station d'usinage à une autre station d'usinage, et la partie supérieure de palier, au moins pour quelques passes opératoire, est maintenue dans les stations d'usinage, par l'intermédiaire d'un soutien auxiliaire rétractable, disposé sur le dispositif adaptateur et agissant sur la partie supérieure de palier, hors de la zone de la liaison vissée, **caractérisé en ce que**
la partie de base de palier et la partie supérieure de palier sont soumises, après le processus de séparation par fracturation, dans le plan de fracturation, à un processus de désolidarisation et de nettoyage, et
la partie supérieure de palier, pendant le processus de séparation et de nettoyage, est fixée précisément en position, par rapport à la partie de base de palier, parallèlement au plan de fracturation et, simultanément, est maintenue à l'état lâche, perpendiculairement au plan de fracturation.

2. Procédé selon la revendication 1, **caractérisé en ce que**, dans toutes les stations d'usinage, la partie de base de palier est bloquée, par serrage, sur le dispositif adaptateur.

3. Procédé selon la revendication 1, **caractérisé en ce que**, lors du processus de séparation par fracturation, des appuis principaux agissent, avec capacité de déformation, sur la partie supérieure de palier.

4. Procédé selon l'une ou plusieurs des revendications précédentes, **caractérisé en ce que**- le processus de désolidarisation s'effectue par effet de vibrations ou de chocs accompagnés de rebondissement.

5. Procédé selon l'une ou plusieurs des revendications précédentes, **caractérisé en ce que** le processus de nettoyage s'effectue par soufflage, aspiration, ou brossage.

6. Procédé selon la revendication 1, **caractérisé en ce qu'**une entaille de séparation par fracturation est aménagée dans le plan de fracturation, au moyen d'un laser, avant le processus de séparation par fracturation.

7. Procédé selon l'une ou plusieurs des revendications 1 à 6 précédentes, **caractérisé en ce que**, après le processus de désolidarisation et de nettoyage, les vis sont introduites et serrées avec un couple de rotation prédéterminé.

8. Procédé selon l'une ou plusieurs des revendications 1 à 7 précédentes, **caractérisé en ce que** l'amenée et l'évacuation du dispositif adaptateur, aux différentes stations d'usinage et hors de celles-ci, s'effectue par l'intermédiaire d'un dispositif à carrousel.

9. Dispositif de fabrication d'un système de palier en plusieurs parties, dans lequel la pièce d'oeuvre, composée d'une partie de base de palier (5) et d'une partie supérieure de palier (6), reliée d'une seule pièce à celle-ci, est amenée à au moins une station de séparation par fracturation, pour procéder à la séparation entre la partie supérieure de palier (6) et la partie de base de palier (5), le long d'un plan de fracturation et menée à une station de vissage, pour procéder au rétablissement de la liaison entre la partie supérieure de palier et la partie de base de palier, au moins d'une liaison vissée présentant deux vis,
un dispositif de transport (2) est prévu, par l'intermédiaire duquel un dispositif adaptateur (1), portant la pièce d'oeuvre, est transporté, d'une station d'usinage à au moins une station d'usinage subséquente, le dispositif adaptateur (1) étant équipé d'un soutien auxiliaire (3) rétractable, disposé rigidement sur le dispositif adaptateur, de manière qu'il agisse sur la partie supérieure de palier (6) de la pièce d'oeuvre, hors de la zone de la liaison vissée, **caractérisé en ce que**, à la suite de la station de séparation par fracturation, est prévue une station de désolidarisation et de nettoyage, dans laquelle
un dispositif de fixation (16) est prévu, pour effectuer la fixation précisément en position, parallèlement au plan de fracturation et pour effectuer le maintien à l'état lâche, perpendiculairement au plan de fracturation.

10. Dispositif de fabrication selon la revendication 9, pour mettre en oeuvre le procédé selon la revendication 2, **caractérisé en ce que**, pour effectuer le blocage par serrage de la partie de base de palier (5) sur le dispositif adaptateur (1), sont prévus des vérins serreurs (9), disposés sur celui-ci et coopérant avec des contrebutées (7, 8).

11. Dispositif de fabrication selon la revendication 9 ou 10, pour mettre en oeuvre le procédé selon la revendication 3, **caractérisé en ce que**, dans la station de fracturation, sont prévus des soutiens principaux (15), placés en appui, lors du processus de séparation par fracturation, avec capacité de déformation, sur la partie supérieure de palier (6).

12. Dispositif de fabrication selon l'une ou plusieurs des revendications 9 à 11 précédentes, pour mettre en oeuvre le procédé selon la revendication 4, **caractérisé en ce que** la station de désolidarisation et de nettoyage est équipée d'un dispositif secoueur ou générateur de chocs accompagnés de rebondissement (19), agissant sur la partie supérieure de palier (6).

13. Dispositif de fabrication selon l'une ou plusieurs des revendications 9 à 11 précédentes, pour mettre en oeuvre le procédé selon la revendication 5, **caractérisé en ce que** la station de désolidarisation et de nettoyage est équipée d'un dispositif de soufflage, d'aspiration ou de brossage.

14. Dispositif de fabrication selon l'une ou plusieurs des revendications 9 à 13 précédentes, **caractérisé en ce que** le dispositif de fixation (16) présente des mandrins de fixation et de maintien (17), susceptibles d'être introduits dans les parçages prévus pour les vis.

15. Dispositif de fabrication selon la revendication 14, pour une liaison vissée présentant deux vis, **caractérisé en ce que** deux mandrins de fixation et de maintien (17) sont prévus, reliés ensemble à une extrémité, par l'intermédiaire d'une platine (18).

16. Dispositif de fabrication selon la revendication 15, **caractérisé en ce que** la platine (18) est reliée à un vérin d'avancement.

17. Dispositif de fabrication selon l'une ou plusieurs des revendications 9 à 11 précédentes, pour mettre en oeuvre le procédé selon la revendication 6, **caractérisé en ce qu'**une station laser est prévue en amont de la station de séparation par fracturation.

18. Dispositif de fabrication selon l'une ou plusieurs des revendications 9 à 17 précédentes, pour mettre en oeuvre le procédé selon la revendication 7, **caractérisé en ce qu'**une station de vissage, dans laquelle les vis sont introduites et par l'intermédiaire d'un dispositif de vissage sont serrés avec un couple de rotation prédéterminé, est prévue en aval de la station de désolidarisation et de nettoyage.

19. Dispositif de fabrication selon l'une ou plusieurs des revendications 9 à 18 précédentes, pour mettre en oeuvre le procédé selon la revendication 8, **caractérisé en ce que** le dispositif de transport (2) est réalisé sensiblement sous forme de dispositif à carrousel (21), sur lequel les stations d'usinage sont disposées, réparties sur la périphérie.

20. Dispositif de fabrication selon la revendication 19, **caractérisé en ce que**, dans la zone du dispositif à carrousel (21), sont prévues une station de chargement et de déchargement, une station laser, une station de séparation par fracturation, une station de désolidarisation et de nettoyage, ainsi qu'une station de vissage.

21. Dispositif de fabrication selon la revendication 20, **caractérisé en ce que** la station de chargement et de déchargement, la station de vissage et station laser, ainsi que la station de séparation par fracturation et la station de désolidarisation et de nettoyage sont chacune groupées en une station double.
